# EUROPEAN PATENT SPECIFICATION

(11) **EP 1 829 674 B1**
(45) Date of publication and mention of the grant of the patent: **28.11.2018**
(21) Application number: 06756976.4
(22) Date of filing: 05.06.2006
(51) Int. Cl.: B32B 3/12, B32B 5/18, E04C 2/36

(54) **SANDWICH PANEL INCLUDING HONEYCOMB STRUCTURE BODY AND METHOD OF PRODUCING THE SANDWICH PANEL**
VERBUNDPLATTE MIT WABENSTRUKTURKÖRPER UND VERFAHREN ZUR HERSTELLUNG DER VERBUNDPLATTE
PANNEAU SANDWICH COMPRENANT UN CORPS DE STRUCTURE EN NID D'ABEILLE ET PROCÉDÉ DE PRODUCTION DU PANNEAU SANDWICH

(30) Priority: 08.06.2005 JP 2005167921; 31.08.2005 JP 2005251877
(43) Date of publication of application: 05.09.2007
(73) Proprietor: Kabushiki Kaisha Shizuka, Yamato-shi Kanagawa 2420018 (JP)
(72) Inventor: TAKE, Kouichi, Kanagawa 2360011 (JP); TAKAHASHI, Kunio, 2570014 Kanagawa (JP)
(74) Representative: Manitz Finsterwald Patentanwälte PartmbB
(86) International application number: PCT/JP2006/311230
(87) International publication number: WO 2006/132184

(56) References cited:
- JP-A- 4 319 428
- JP-A- 8 174 731
- JP-A- 8 174 732
- JP-A- 9 150 472
- JP-A- 08 230 081
- JP-A- 2002 240 174
- JP-A- 2003 236 953
- JP-A- 2004 009 726
- JP-A- 2004 027 788
- JP-A- 2004 082 677
- JP-A- 2004 082 677
- JP-U- 48 064 050

## Description

### FIELD OF INVENTION

The present invention relates to a gas-permeable sandwich panel provided with outer surface porous stuff on one or both sides, and a honeycomb structure body at the centre thereof, in which cells of a honeycomb are filled with phenol resin foam of a linked-cellular structure.

### BACKGROUND OF INVENTION

Sandwich panels with a honeycomb structure body at the centre thereof are used for walls and floors in airplanes, railway-vehicles and houses. Among the uses of sandwich panels, sound barrier material and sound absorbing material are important.

In this specification, a sandwich panel for sound barrier material is supposed as such provided with gas barrier layers on both sides and a piece of honeycomb at the centre thereof, regardless of cells of the honeycomb being filled up or vacant. A sound absorbing material is supposed as such provided with gas permeable stuff at least on one side thereof, having cells of the honeycomb being filled up with porous material for attenuating sounds which make incidence through the gas permeable stuff. However, it is not certain, from person to person, whether a sandwich panel is called as a sound barrier material or a sound absorbing material.

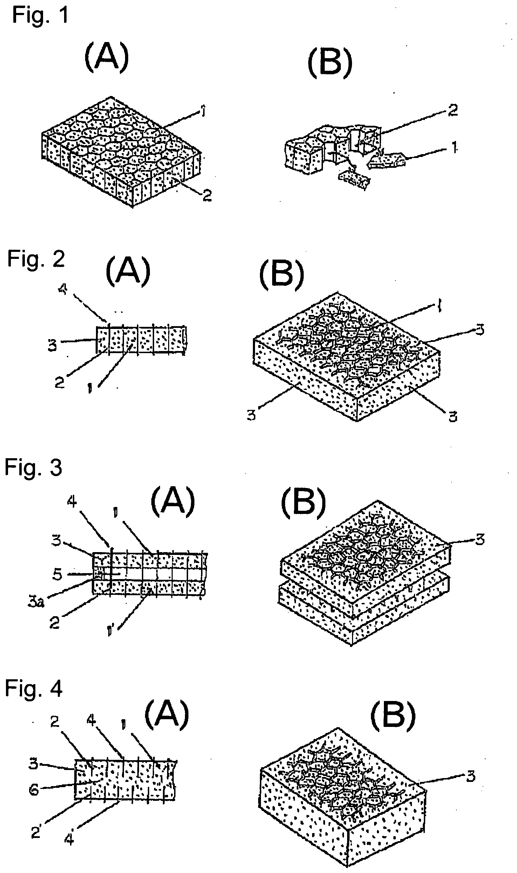

Prior-art documents which may have some relationship with the present invention are raised below and explained briefly. The patent document 1 presents an example in which cells of a honeycomb are filled up with some filler material. It discloses a structure body in which a honeycomb 2 and a sheet-like filler material 1 have the same heights and widths. Fig.lA of the present invention shows the same honeycomb -- filler configuration shown in the patent document 1, and Fig.1B of the present invention explains how the filler material drops off from the outer edge area of the honeycomb in the configuration shown in Fig.1A.

The reason is that the six-sided cell walls located in the outer edge area of the honeycomb become opened when the cell walls are cut out, and the filler material can not be stably held there. When one wishes to produce a sandwich panel using the honeycomb structure body mentioned above, cutting the honeycomb structure body to fit the surface material is necessary. However, if the honeycomb and the filler material have the same dimensions, it can not be avoided the filler material from dropping off out of the outer edge area of the honeycomb due to above-mentioned reason.

Empty cells produced by the filler material that drops off deteriorate the barrier capabilities against sound and heat expected to the filler material, and damage the commodity value of the sandwich panel. Further, the filler material that have dropped off from the cells have to go to waste.

To prevent the filler material from dropping off, it may be possible to fix the filler material to the honeycomb with an adhesive agent. However, the adhesive agent will cause increase in cost and weight, besides work load, and in addition, it will cause to deteriorate the barrier capabilities against sound and heat of the sandwich panel.

The patent document 2 discloses another invention, titled "Method of producing sound absorbing panel." The described sound absorbing panel consists of a piece of honeycomb with empty cells, having a mesh layer over a perforated metal plate on each side of the honeycomb with a very thin film-like adhesive agent of thermosetting resin. However, the described empty cells differs from the definition of a sound absorbing panel.

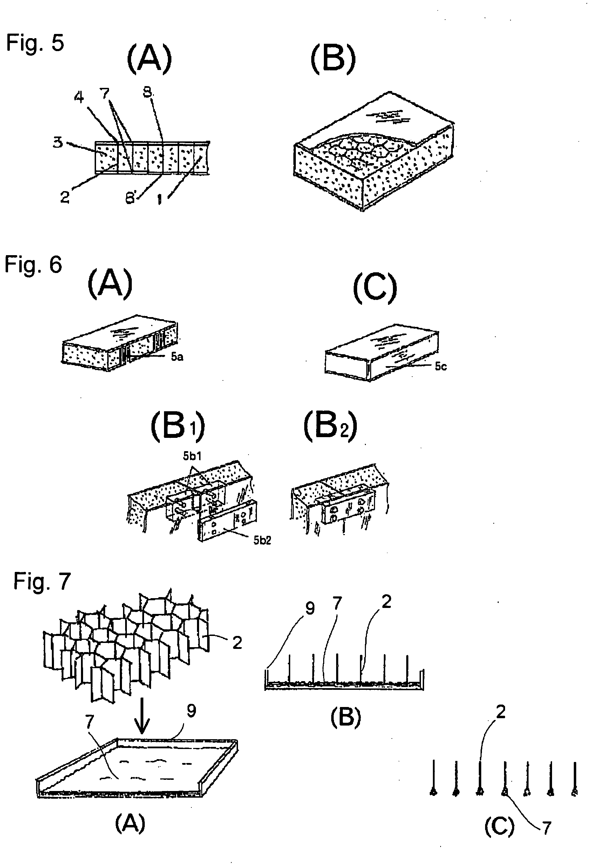

The patent document 3 discloses an invention titled "Method of producing panel-like core stuff." There are described that a foam material is inserted into cells of a honeycomb with pressure, that an adhesive agent is applied to inner surface of the cells by dipping or spraying, and so on. However, no special precaution in application of the adhesive agent not to damage the gas permeability of the surface material is seen. In a drawing (Fig. 6) of the document showing an example, the adhesive agent is drawn as a plane (a horizontal line, in a section).

The patent document 4 discloses a utility model titled "Sandwich panel," in which a foam sheet having a thickness smaller than the height of a honeycomb is inserted into the cells of the honeycomb to the half depth of the cells. There are described that adhesion between the honeycomb and the surface materials is made at the end of the honeycomb, that the foam material can be melt by the adhesive agent, if the end surface of the foam material (polyurethane foam) comes to the level of the end surface of the honeycomb, and that unevenness of the surface material can be made in that case. However, no special precaution in application of the adhesive agent not to damage the gas permeability of the surface material is seen.

Patent document 1: JP-07-88995
Patent document 2: JP-09-156010
Patent document 3: JP-01-198951
Patent document 4: JP-Utility Model-61-30844

Each of documents JP2004027788, JP2004009726, JP9150472, JP8174732, JP2002240174, JP8174731, JP4319428 and JP2004082677 discloses a honeycomb structure body comprising a honeycomb and phenol foam inserted in cell spaces of the honeycomb.

### DISCLOSURE OF INVENTION

### PROBLEMS TO BE SOLVED BY INVENTION

Problems to be solved by the present invention, in producing a gas permeable sandwich panel provided with outer surface porous stuff on one or both sides, and a honeycomb structure body at the centre thereof, in which cells of a honeycomb are filled with phenol resin foam of a linked-cellular structure, are an effective measure to prevent dropping off of the filler material from the cells located in the outer edge area of the honeycomb (the first problem), and a method of applying the adhesive agent not to damage the permeability of the foam material and surface porous stuff (the second problem).

### MEASURES FOR SOLVING PROBLEMS

The first problem can be solved by selecting the height and width of the sheet-like foam material larger than those of the honeycomb, so that the honeycomb is surrounded by the edges of the sheet-like foam when it is pressed into the cells of the honeycomb (claim 1).

The honeycomb can be made of paper, metal, plastics, ceramics and others, and the filler material can be chosen from hard foams of phenol resin, polyurethane, polystyrene, and other plastics. A hard foam of phenol resin with a linked-cellular structure, which exibits a superor absorbing abilities to water and sounds, is particularly suited. Laying the sheet-like filler material and the honeycomb together, and pressing them by a press machine, a honeycomb structure body in which the filler material is filled in the cells of the honeycomb is produced.

The second problem can be solved by a method of producing a sandwich panel including the steps of applying a liquid adhesive agent of a specified viscosity to a narrow band at the tips of the cell walls directing one side of the honeycomb, pushing the porous surface material against the tips of the cell walls, pressing the water-absorbing foam material into the cells of the honeycomb, from the other side of the cell where the adhesive agent has been applied, until it comes to contact with the adhesive agent, so that the foam material absorbs water from the adhesive agent to accelerate hardening (Claim 6).

Applying the adhesive agent all over the surface of the foam material or surface material should be avoided. An alternative way is to limit the amount and spot of applying the adhesive agent, not to damage their permeability. Adhesion between the honeycomb and the surface material should be made in the limited spots where the tips of the cell walls make contact with the surface material.

It is necessary to remove water from the adhesive agent to make it harden. However, evaporation of water in the sandwich panel is slow because it is a closed space, and hardening of the adhesive agent is time consuming. So, the supreme water-absorbing ability of the phenol resin foam is utilized in the present invention, by applying the adhesive agent only to the tips of the cell walls of the honeycomb, pressing the surface material against there, inserting the water-absorbing foam into the cells of the honeycomb by pressing it in the other side therof where the adhesive agent has not been applied, until it comes in contact with the adhesive agent. Then, water contained in the adhesive agent is rapidly absorbed, and hardening is accelerated. The water absorbed by the foam is evaporated gradually through the permeability of the sandwich panel.

### ADVANTAGEOUS EFFECTS OF INVENTION

According to Claim 1, because the sheet-like foam is given a greater plane size than that of the honeycomb, the foam is not cut apart to pieces by surrounding the edges of the honeycomb and the oneness of the foam is preserved even after it is inserted into the cells of the honeycomb.

The honeycomb structure body disclosed by Claim 1 gives a sandwich panel of good appearance by an easey processing, because the foam material is barely exposed around the honeycomb.

Various after-processing such as attaching a space filler connecting partly the surface material, putting a reinforcement for attachment of other elements, or inserting wooden plates or plastic plates around the panel to connect to the surface material, can be easily done by the softness and easy-process ability of the foam material barely exposed around the honeycomb.

According to the invention of Claim 6, damages to the permeability is kept to the least, as the quantity of the adhesive agent applied to the surface material is strictly limited,
For example, in case of a honeycomb having six-sided cell walls, the spots where the adhesive agent is applied are the tips of the cell walls and a hexagonal contour of the walls on the surface material, the area of which in total is very small.

Further, a precise positioning of the surface material on the honeycomb is attained, as the adhesive agent hardens fast enough for preventing the surface material from diverging from its right position, by absorbing the water in the adhesive agent with the phenol resin foam

### DESCRIPTION OF PREFERRED EMBODIMENT

### (First Embodiment)

The first preferred embodiment to the invention of Claim 1 is as follows:
In the honeycomb structure body, an upward end and/or a downward end of the honeycomb (2) project (s) by a certain length beyond the surface (s) of the foam (1). (Claim 2)

Using the honeycomb structure body having the projection (s) to produce a sandwich panel, it becomes possible to apply the adhesive agent only to the tip (s) of the projection (s) and to avoid putting the adhesive agent to the surface of the foam material.

### (Second Embodiment)

The second preferred embodiment to the invention of Claim 1 is as follows:
One more sheet of phenol resin foam (1') is included in the honeycomb structure body, and the two sheets (1, 1') together are inserted into the cells of the honeycomb (2) from upper and bottom ends of the cells to make a room (5) of a certain depth between the two sheets in the middle of the height of the honeycomb. (Claim 3)

Because of the air room, the sound absorbing characteristic, in from low to high frequencies, of the embodied honeycomb structure body becomes improved, and a sound absorbing material for a full frequency band is realized.

### (Third Embodiment)

The third preferred embodiment to the invention of Claim 1 is as follows:
One more honeycomb (2') is included in the honeycomb structure body, in which the foam (1) has a thickness greater than the total height of the two honeycombs (2, 2'), and the two honeycombs are pressed into the foam from both sides thereof, leaving an intermediate foam layer (6) where no honeycomb is included. (Claim 4)

Because of the intermediate foam layer, the heat flow conducting in the honeycomb structure body is cut, and the intermediate foam layer makes itself an adiabatic layer.

### (Fourth Embodiment)

The fourth preferred embodiment to the invention of Claim is as follows:
In any one of the above-mentioned honeycomb structure body, at least one of surface materials (8, 8') adhered to both sides is gas permeable.

### (Fifth Embodiment)

A preferred embodiment to to the invention of Claim 6, which realizes a state in which the liquid adhesive agent is applied to the tips of cell walls in a narrow belt-like areas, further comprises the steps of:
selecting an emulsion adhesive agent for the adhesive agent, pouring the emulsion adhesive agent into a flat vat,
dipping only the tips of the cell walls of the honeycomb there and pulling up. (Claim 7)

As it is hard to apply a low viscosity adhesive agent, which flows easily, to the tips of cell walls, one which exhibits an appropriate viscosity (and a surface tension, at the same time) is preferred. From that reason, an emulsion adhesive agent is selected in the present embodiment. It is convenient to dip the tips of the cell walls in the vat where the adhesive agent is poured, to apply it only to the tips in a narrow belt-like areas.

### EXAMPLE 1

Figs. 2A and 2B are a section and a plan showing a honeycomb structure body for a first example of the prsent invention, which consists of a foam material 1 and a honeycomb 2. In this example, a hard foam material of phenol resin having a linked-cellular structure, and dimensions of 1030 × 1030 × 28 mm in height • width • thickness, with a density of less than 30 kg/m³, was selected. And, as the honeycomb material, a paper honeycomb having a cell-size (length between parallel walls) of 12 mm and dimensions of 1000 × 1000 × 30 mm in height • width • thickness was selected.

As the selected phenol resin foam has a low density, and has a hardness suited to be cut by the cell walls of the honeycomb, the foam is filled in the cells of honeycomb in a good condition.

Figs. 2A and 2B also exhibit two characteristics of the above honeycomb structure body. The first one is that the honeycomb 2 is surrounded by a rim 3 of the foam material having a width of 15 mm, as the dimensions of the foam material is greater than those of the honeycomb by 30 mm. This characteristic comes directly from the problem solving measure of the present invention.

Another characteristic is that a projection 4 of the honeycomb 2 is formed above the surface of the foam material 1. This projection 4 is formed by pressing in the honeycomb 2 having the height of 30 mm into the foam material 1 whose thickness is 28 mm, and stopping motion when the lower surface of the honeycomb comes to that of the foam material, leaving the projection 4 of 2 mm above the surface of the foam material 1.

The projection 4 works for a surface-guard of the foam material, and at the same time, makes it possible to apply the adhesive agent only to the tip of the projection 4, not to the surface of the surface of the foam material 1.

There can be a case, depending on the usage, where no projection is produced, by selecting the height and thickness of the honeycomb and the foam material to be equal.

### EXAMPLE 2

Figs. 3A and 3B are a section and a plan showing a honeycomb structure body for a second example of the present invention, which is provided with a air room 5 in the middle of the body height. The honeycomb structure body of this configuration effectively absorbs sounds of a full frequency band ranging from low to high frequencies. In this example, items other than that the height of the honeycomb is 50 mm, and that two foam material sheets 1, 1' having a thickness of 20 mm each are used, are the same as those in the example 1. The thickness of the foam sheet can be 15 mm, each.

By pressing in the two foam sheets into the cells of honeycomb from the upper and/ or lower end, the honeycomb is surrounded by the rims of the foam sheets, each has 15 mm width, and an air room 5 having the height of 10 mm between the two foam sheets is formed in the middle of height of the honeycomb.

The reference sign 3a denotes a support which is inserted between the rims to maintain the air room 5 there. The support 3a can be formed by producing frame-like banks on top of the surface of the foam sheet in advance, or by inserting four-faced rods of the foam material in-between the foam sheets from the four sides.

### EXAMPLE 3

Figs. 4A and 4B are a section and a plan showing a honeycomb structure body for a third example of the prsent invention, which comprises two honeycombs 2, 2,' placed respectively upper and lower parts in a thick foam material 1. And, between the two honeycombs 2, 2,' there is an intermediate foam layer 6 having no honeycomb there.

Items other than that the thickness of the foam material is 50 mm, and that two honeycombs whose height is 20 mm each are used, are the same as those in the example 1. Each height of the pair of honeycombs can be 25 mm and 15 mm

In this example, the honeycomb is surrounded by the rim 3, and projections 4, 4' of the honeycomb are formed from both surfaces of the foam material.

In the honeycomb structure body of the example 3, heat flow conducting in the body is cut by the intermediate foam layer 6, the foam material consisting the intermediate foam layer 6 makes itself an adiabatic layer. With a thicker intermediate foam layer 6, a greater adiabatic nature is attained.

The honeycombs positioned near the surfaces of the foam material can serve as surface protection.

### EXAMPLE 4

Figs. 5A and 5B are a section and a plan showing a sandwich panel for a fourth example of the present invention, which has in its centre the honeycomb structure body shown in Fig. 2.

In the honeycomb structure body, as shown in Fig. 2, there are the rim 3 and the projections 4 above both sides of the foam material, which serve as adhesion spots to which the adhesive agent is applied, to adhere the surface materials 8, 8'. The surface materials 8, 8' are aluminium plates of 1.2 mm thick, a gas barrier material. When sound absorbing or humidity conditioning material is sought, a gas-permeable material is used on one or both sides thereof.

The projection 4 can be formed on one or both surface (s) of the foam material, or no projection at all.

The sandwich panel of the example 4 was produced by:
applying a well agitated two-liquid epoxy adhesive agent 7 on the aluminium plates 8, 8' at a rate of 300 ∼ 600 g/m², the projections 4 are pushed against the aluminium plates 8, 8' to adhere each other. After the adhesive agent hardened, edge parts of te panel is cut to fit the dimensions of the aluminium plates. It is easy to process the panel as the edge parts thereof are covered with rims 3.

### EXAMPLE 5

Figs. 6A, B₁, B₂ and C illustrate 3 cases of after processes added to the sandwich panel shown in the fourth example abive. Fig. 6A shows a case in which a reinforcement 5a is inserted partly arround the panel. Figs. 6B₁, 6B₂ show a case in which a screw plate 5b1 for fixing a connecting plate 5b2 for connecting two panels with screw to a prescribed position on the surface of the panel. Fig. 6C shows a case in which a protection plate 5c is put to the entire periphery of the panel.

In the examples shown above, cases in which dimensions in height and width of the foam sheet (s) are both larger than those of the honeycomb, However, if either of height and width is larger than that of the honeycomb, the same advantage can be obtained.

### EXAMPLE 6

Figs. 7∼10 are conceptual diagrams or various sections and plans showing the process of manufacturing the sandwich panel of the present example,

Fig. 7 (A) illustrates a situation in which an adhesive agent 7 is poured into a flat and open vat 9 to the depth of 2 ∼ 3 mm, and over the vat, there is seen a honeycomb 2.

The honeycomb 2 can be made of paper, metal, plastics, inorganic substance, and above all, paper is preferable from the view point of weight. In this example, a paper honeycomb soaked with magnesium silicate was used. The shape of the cells is not restricted to a hexagon, but triangle, square, pentagon, circle, wavy pattern are acceptable.

Though an aluminium fibre cloth was adopted for the gas permeable surface material in this example, a glass fibre cloth, woven plastic fibre cloth, and so on will be usable.

The vat 9 is as large as it can take in a honeycomb having dimensions of 1000 × 1000 × 30 mm in height • width • thickness, and the emulsion adhesive agent poured in there has a viscosity of 45,000 ∼ 85,000 MPa • s, containing 42 ∼ 46 wt % of non-volatile components and 54 ∼ 58 wt % of moisture.

The honeycomb was immersed in the vat, and the adhesive agent was applied to the height of 1 ∼ 2 mm from the tip of the cell walls.

Fig. 7 (B) illustrates a situation in which the honeycomb 2 is immersed in the adhesive agent 7 held in the vat 9. and Fig, 7(C), the adhesive agent 7 put to the tip of the cell wall in a belt-like area of a certain height, and shaped in a small drop there (shown by reference sign 7).

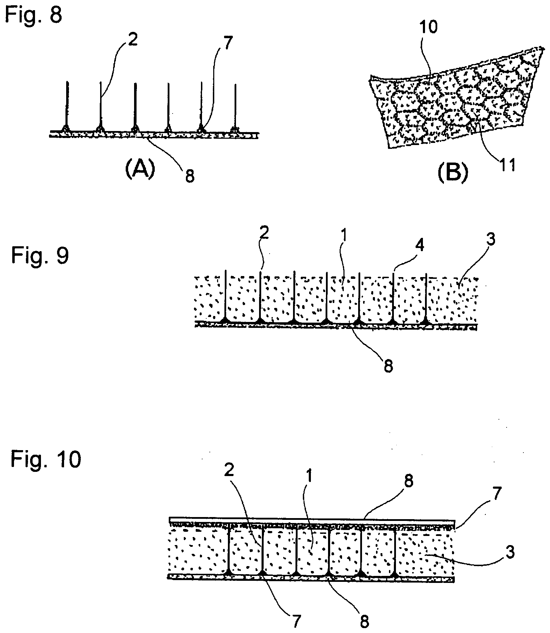

Fig. 8 (A) illustrates a situation in which a permeable surface material 8 made of aluminium fibre is pushed against the tip of cell walls of the honeycomb where the adhesive agent is applied. The dimensions of the surface material 8 are 1000 × 1000 × 1.6 mm in height • width • thickness. The reference sign 7 denotes the adhesive agent filling the recess made by the tip of cell walls and the surface material.

Fig. 8 (B) illustrates a situation in which the surface material 8 after once having been adhered to the cell walls of the honeycomb is torn away for a test of hardening result. Broken cell walls near the adhering spot are seen (shown by the reference sign 10). The gas permeable surfaces which are important for sound or moisture absorption / releasing are not clogged with the adhesive agent.

Fig. 9 illustrates a situation in which the foam material 1 is filled in the cell spaces. The honeycomb is laid on the foam material, and pressed down until the upper surface of the honeycomb where the adhesive agent has been applied is reached. Water in the adhesive agent is absorbed by the foam material in this situation, the adhesive agent hardens rapidly.

In Fig. 9, the dimensions of the foam material 1 are 1000 × 1000 × 28 mm in height • width • thickness, which are larger than those of the honeycomb by 20 mm in height and width. Accordingly, a rim (reference sign 3) of the foam material of 10 mm width is formed around the honeycomb. Thanks to the rim, cutting of the cell walls near the edges of the panel is prevented, and the foam material included in adjacent cells is prevented from dropping off.

Because the thickness of the foam material is 28 mm, and the height of the honeycomb is 30 mm, an allowance of 2 mm is given, and it produces a projection above the surface of the foam material, when the honeycomb is fully pressed in the foam material. In the drawing, a reference sign 4 is assigned to the projection. The projection 4 supports the surface of the surface material where the adhesive agent is applied material, not to closely touch with the surface of the foam material, and prevent the linked- cellular of the foam material from being clogged.

For the gas barrier surface material, aluminium plate is preferable because of light weight, easy process ability, and back up effects in obtaining a self sustaining strength. For the adhesive agent 7, epoxy compounds (urethan compounds or acrylic compounds) which harden at normal temperature, are preferred. One of these adhesive agent is applied all over the surface of the aluminium plate to adhere it to the projections 4. With this treatment, corrosion prevention against moisture can be expected.

On the other hand, as mentioned above, the phenol resin foam has a strong water absorbing ability. When the foam material filled in the cell spaces comes in contact with the adhesive agent 7, a rapid absorption of water in the adhesive agent occurs, and hardening of the adhesive agent is accelerated.

### BRIEF DESCRIPTION OF DRAWING

- FIG. 1:: (A) honeycomb structure body shown in a prior art document , and (B) a view in which foam material falls off from cell spaces of the honeycomb.
- FIG. 2:: section drawing (A) and plan drawing (B) showing the first example of the present invention, in which dimensions of the foam material are larger than those of the honeycomb.
- FIG. 3:: section drawing (A) and plan drawing (B) showing the second example of the present invention, in which the air room is formed in the middle of the honeycomb.
- FIG. 4:: section drawing (A) and plan drawing (B) showing the third example of the present invention, in which the intermediate foam layer is formed in the middle of the foam material
- FIG. 5:: section drawing (A) and plan drawing (B) showing the fourth example of the present invention, in which the intermediate foam layer in the middle of the foam material
- FIG. 6:: (A) a reinforcement 5a inserted partly around the panel. (B₁ and B₂) a screw plate 5b1 for fixing a connecting plate 5b2 for connecting two panels with screw to a prescribed position on the surface of the panel.
(C) a protection plate 5c put to the entire periphery of the panel.
- FIG. 7:: (A) flat and open vat in which adhesive agent is poured, and honeycomb.
(B) honeycomb immersed in adhesive agent held in the vat
(C) adhesive agent put to the tip of the cell wall
- FIG. 8:: (A) surface material torn away from honeycomb for test of hardening result, after once adhered.
(B) broken cell walls near the adhered spots
- FIG. 9:: foam material filled in the cell spaces
- FIG. 10:: completed sandwich panel by putting surface material to the honeycomb shown in FIG. 9

### REFERENCE SIGNS

- 1, 1': foam material
- 2, 2': honeycomb
- 3: rim formed by foam material
- 3a: support for air room
- 4, 4': projection
- 5: air room
- 5a: reinforcement
- 5b₁: screw plate
- 5b₂: screw plate
- 5c: protection plate
- 6: intermediate foam layer
- 7: adhesive agent
- 8, 8': surface material
- 9: vat
- 10: cell wall broken near adhered spot
- 11: gas permeable surface material

## Claims

1. A honeycomb structure body comprising a honeycomb (2) and a phenol resin sheet-like foam (1) inserted in cell spaces of the honeycomb (2), the honeycomb (2) having a plurality of cells and the sheet-like foam (1) having a linked cellular structure, wherein the size in height and width of the sheet-like foam (1) before insertion is greater than the size of the honeycomb (2), so that the honeycomb (2) having a plurality of cells is surrounded by the edges of the sheet-like foam (1) and that the oneness of the sheet-like foam (1) is preserved after the sheet-like foam (1) is inserted into the cells of the honeycomb (2).

2. A honeycomb structure body according to claim 1, wherein an upward end and/or a downward end of the honeycomb (2) project(s) by a certain length beyond the surface(s) of the foam (1).

3. A honeycomb structure body according to claim 1, wherein one more sheet of phenol resin foam (1') is included, and the two sheets (1, 1') together are inserted into the cells of the honeycomb (2) from upper and bottom ends of the cells to make a room (5) of a certain depth between the two sheets in the middle of the height of the honeycomb.

4. A honeycomb structure body according to claim 1, wherein one more honeycomb (2') is included, the foam (1) has a thickness greater than the total height of the two honeycombs (2, 2'), and the two honeycombs are pressed into the foam from both sides thereof, leaving an intermediate foam layer (6) where no honeycomb is included.

5. A honeycomb structure body according to any one of claims 1 to 4, wherein surface materials (8, 8') are adhered to both sides of the honeycombs (2, 2') and at least one of the surface materials (8, 8') is gas-permeable.

6. A method of producing the honeycomb structure body according to claim 5, comprising the steps of:
applying a liquid adhesive agent (7) exhibiting a prescribed value of viscosity to the tips of cell walls in narrow belt-like areas on one side of the honeycomb,
pressing a permeable surface material (8) onto the side of the honeycomb to which the adhesive agent has been applied, and
inserting a water-absorbent foam (1) into the cell spaces of the honeycomb from the other side thereof, until the foam comes in contact with the adhesive agent that has been applied,
wherein hardening of the adhesive agent is accelerated because water in the adhesive agent is absorbed by the water-absorbent foam.

7. A method of producing the honeycomb structure body according to claim 6, wherein the step of applying the liquid adhesive agent to the tips of cell walls further includes selecting an emulsion adhesive agent for the adhesive agent (7), pouring the emulsion adhesive agent into a flat vat (9), and dipping only the tips of the cell walls of the honeycomb there and pulling up.

## Patentansprüche

1. Wabenstrukturkörper, umfassend eine Wabe (2) und einen plattenartigen Phenolharzschaum (1), der in Zellzwischenräume der Wabe (2) eingesetzt ist, wobei die Wabe (2) eine Mehrzahl von Zellen aufweist und der plattenartige Schaum (1) eine vernetzte zelluläre Struktur aufweist, wobei die Größe in Höhe und Breite des plattenartigen Schaums (1) vor dem Einsetzen größer ist als die Größe der Wabe (2), so dass die Wabe (2), die eine Mehrzahl von Zellen aufweist, von den Rändern des plattenartigen Schaums (1) umgeben ist, und dass die Einheit des plattenartigen Schaums (1) bewahrt ist, nachdem der plattenartige Schaum (1) in die Zellen der Wabe (2) eingesetzt worden ist.

2. Wabenstrukturkörper nach Anspruch 1, wobei ein oberes Ende und/oder ein unteres Ende der Wabe (2) eine bestimmte Länge über die Oberfläche/Oberflächen des Schaums (1) hinaus vorsteht/vorstehen.

3. Wabenstrukturkörper nach Anspruch 1, wobei eine weitere Platte aus Phenolharzschaum (1') enthalten ist, und die beiden Platten (1, 1') zusammen in die Zellen der Wabe (2) von oberen und unteren Enden der Zellen eingesetzt sind, um einen Raum (5) mit einer bestimmten Tiefe zwischen den zwei Platten in der Mitte der Höhe der Wabe zu schaffen.

4. Wabenstrukturkörper nach Anspruch 1, wobei eine weitere Wabe (2') enthalten ist, wobei der Schaum (1) eine Dicke aufweist, die größer ist als die Gesamthöhe der beiden Waben (2, 2'), und die beiden Waben von seinen beiden Seiten in den Schaum gepresst sind, wobei eine dazwischenliegende Schaumschicht (6) verbleibt, in welcher keine Wabe enthalten ist.

5. Wabenstrukturkörper nach einem der Ansprüche 1 bis 4, wobei die Oberflächenmaterialien (8, 8') an beiden Seiten der Waben (2, 2') anhaften, und zumindest eines der Oberflächenmaterialien (8, 8') gasdurchlässig ist.

6. Verfahren zum Herstellen des Wabenstrukturkörpers nach Anspruch 5, umfassend die Schritte:
Auftragen eines flüssigen Klebstoffes (7), der einen vorgeschriebenen Viskositätswert zeigt, auf die Spitzen von Zellenwänden in schmalen, bandartigen Bereichen auf einer Seite der Wabe,
Pressen eine durchlässigen Oberflächenmaterials (8) auf die Seite der Wabe, auf die der Klebstoff aufgetragen worden ist, und
Einsetzen eines Wasser absorbierenden Schaums (1) in die Zellenzwischenräume der Wabe von ihrer anderen Seite, bis der Schaum mit dem Klebstoff, der aufgetragen worden ist, in Kontakt gelangt,
wobei das Aushärten des Klebstoffes beschleunigt wird, weil Wasser in dem Klebstoff durch den wasserabsorbierenden Schaum absorbiert wird.

7. Verfahren zum Herstellen des Wabenstrukturkörpers nach Anspruch 6, wobei der Schritt des Auftragens des flüssigen Klebstoffes auf die Spitzen von Zellenwänden ferner ein Auswählen eines Emulsionsklebstoffes für den Klebstoff (7), das Gießen des Emulsionsklebstoffes in eine flache Schale (9) und ein Eintauchen von nur den Spitzen der Zellwände der Wabe dort und ein Hochziehen umfasst.

## Revendications

1. Corps à structure en nid-d'abeilles comprenant un nid-d'abeilles (2) est une mousse de résine phénolique semblable à une feuille (1) insérée dans les espaces des cellules du nid-d'abeilles (2), le nid-d'abeilles (2) ayant une pluralité de cellules et la mousse semblable à une feuille (1) présente une structure cellulaire avec liaison, dans lequel la taille en hauteur et en largeur de la mousse semblable à une feuille (1) avant insertion est plus grande que la taille du nid-d'abeilles (2), de telle façon que le nid-d'abeilles (2) ayant une pluralité de cellules est entouré par les bordures de la mousse semblable à une feuille (1) et que l'unicité de la mousse semblable à une feuille (1) est préservée après que la mousse semblable à une feuille (1) a été insérée dans les cellules du nid-d'abeilles (2).

2. Corps à structure en nid-d'abeilles selon la revendication 1, dans lequel une extrémité supérieure et/ou une extrémité inférieure du nid-d'abeilles (2) se projette(nt) d'une certaine longueur au-delà de la (des) surface(s) de la mousse (1).

3. Corps à structure en nid-d'abeilles selon la revendication 1, dans lequel une autre feuille de mousse en résine phénolique (1') est incluse, et les deux feuilles (1, 1') conjointement sont insérées dans les cellules du nid-d'abeilles (2) depuis les extrémités supérieures et les extrémités inférieures des cellules pour réaliser un espace (5) d'une certaine profondeur entre les deux feuilles au milieu de la hauteur du nid-d'abeilles.

4. Corps à structure en nid-d'abeilles selon la revendication 1, dans lequel un autre nid-d'abeilles (2') est inclus, la mousse (1) ayant une épaisseur supérieure à la hauteur totale des deux nid-d'abeilles (2, 2'), et les deux nids-d'abeilles sont pressés dans la mousse depuis les deux côtés de celle-ci, laissant une couche de mousse intermédiaire (6) dans laquelle aucun nid-d'abeilles n'est inclus.

5. Corps à structure en nid-d'abeilles selon l'une quelconque des revendications 1 à 4, dans lequel des matériaux de surface (8, 8') sont adhérés sur les deux côtés des nid-d'abeilles (2, 2',) et l'un au moins des matériaux de surface (8, 8') est perméable aux gaz.

6. Procédé pour produire le corps à structure en nid-d'abeilles selon la revendication 5, comprenant les étapes consistant à :
appliquer un agent adhésif liquide (7) présentant une viscosité de valeur prescrite sur les extrémités des parois des cellules dans des zones étroites semblables à des ceintures sur un côté du nid-d'abeilles,
presser un matériau de surface perméable (8) sur le côté du nid-d'abeilles sur lequel a été appliqué l'agent adhésif, et
insérer une mousse capable d'absorber de l'eau (1) dans les espaces des cellules du nid-d'abeilles depuis l'autre côté de celui-ci, jusqu'à ce que la mousse vienne en contact avec l'agent adhésif qui a été appliqué,
dans lequel le durcissement de l'agent adhésif est accéléré par ce que l'eau dans l'agent adhésif est absorbée par la mousse capable d'absorber de l'eau.

7. Procédé pour produire le corps à structure en nid-d'abeilles selon la revendication 6, dans lequel l'étape consistant à appliquer l'agent adhésif liquide sur les extrémités des parois des cellules inclut en outre les opérations consistant à sélectionner un agent adhésif sous forme d'émulsion pour l'agent adhésif (7), à verser l'agent adhésif sous forme d'émulsion dans un récipient plat (9), et plonger uniquement les extrémités des parois des cellules du nid-d'abeilles dans celui-ci, et à les tirer vers le haut.
